# DEMANDE DE BREVET EUROPEEN

(11) **EP 2 278 466 A1**
(43) Date de publication de la demande: **26.01.2011**
(21) Numéro de dépôt: 10167630.2
(22) Date de dépôt: 29.06.2010
(51) Int. Cl.: G06F 9/50

(54) **Dispositif et procédé pour l'exécution distribuée de traitements de données numériques**

(30) Priorité: 15.07.2009 FR 0954903
(71) Demandeur: Commissariat à l'Énergie Atomique et aux Énergies Alternatives, 75015 Paris (FR)
(72) Inventeur: Thonnart, Yvain, 38100 Grenoble (FR)
(74) Mandataire: Bonnet, Michel

(57) **Abrégé**

Ce dispositif (10) de traitement de données numériques à modèle de traitement en flot de données est apte à exécuter, de façon distribuée sur une pluralité de noeuds de calcul (16, 18, 20, 24, 26, 28, 30, 34, 36, 38, 44, 48), une pluralité de traitements de données modélisés par des graphes orientés, deux traitements différents pouvant comporter au moins un noeud de calcul commun (16, 20, 26, 28, 30, 34, 36, 38).

Il comporte des moyens (12) pour, à partir d'un multi-graphe orienté valué constitué de l'union de plusieurs graphes de traitements distincts et divisé en plusieurs sous-multi-graphes orientés valués (54, 56, 58), dits tronçons, dont les noeuds d'entrée et de sortie sont des noeuds de mémoire tampon du multi-graphe, identifier un module de coordination (16, 26, 34) pour chaque tronçon. En outre, chaque module de coordination identifié est conçu pour synchroniser des portions de traitements destinées à être exécutées dans le tronçon auquel il est associé indépendamment de portions de traitements destinées à être exécutées dans les autres tronçons.

## Description

La présente invention concerne un dispositif de traitement de données numériques à exécution distribuée d'une pluralité de traitements de données sur une pluralité de noeuds de calcul. Elle concerne également un procédé d'exécution distribuée d'une pluralité de traitements de données sur une pluralité de noeuds de calcul d'un tel dispositif.

Elle s'applique notamment à des dispositifs de traitement de données de type système sur puce électronique comportant une pluralité de microprocesseurs intégrés et interconnectés, aptes à exécuter des traitements en parallèle.

Plus précisément, l'invention concerne un dispositif de traitement de données numériques à modèle de traitement en flot de données dans lequel chaque traitement de données destiné à être exécuté sur le dispositif est modélisé par un graphe orienté comportant des noeuds de calcul, des noeuds de mémoire tampon et des liens orientés de transfert de données entre ces noeuds depuis au moins un noeud de mémoire tampon d'entrée vers au moins un noeud de mémoire tampon de sortie, deux traitements différents pouvant mutualiser des ressources, c'est-à-dire comporter au moins un noeud de calcul commun.

Dans le contexte de l'invention, on entend par « traitement » une succession d'opérations élémentaires dont l'exécution est distribuée sur le dispositif et permet de fournir une fonctionnalité précise au dispositif. Un traitement reçoit des données d'entrées et fournit des données de sorties par application de cette fonctionnalité aux données d'entrée. Il correspond à un ensemble maximal d'échanges interdépendants de flots de données entre ressources du dispositif, depuis des mémoires d'entrées jusqu'à des mémoires de sortie du dispositif, sans nécessiter une reprogrammation de son architecture.

On entend par « noeud de *calcul », une ressource matérielle de type calculateur du dispositif, telle qu'un microprocesseur ou une portion de microprocesseur, dédiée à l'exécution d'une fonction prédéterminée dans un traitement. Un noeud de calcul est potentiellement « multivalent », c'est-à-dire qu'il peut servir à plusieurs traitements. Il a, pour chaque traitement potentiel, une ou plusieurs entrées et une ou plusieurs sorties.

On entend par « noeud de mémoire tampon », une ressource matérielle de type mémoire du dispositif, telle qu'une zone de mémoire RAM ou autre, dédiée au stockage temporaire de données dans un traitement : une telle ressource est communément qualifiée de « buffer » et se remplit ou se vide de données selon une logique par exemple de type FIFO (de l'Anglais « First In First Out »). Un noeud de mémoire tampon est « monovalent », c'est-à-dire qu'il ne peut servir qu'à un seul traitement. Il n'y a pas de condition particulière imposée entre ses entrées et ses sorties, mais il est toutefois nécessaire de garantir qu'il puisse se vider de ses données pour l'exécution d'un traitement, indépendamment d'autres traitements. En pratique, les noeuds de mémoire tampon peuvent être regroupés, par exemple par quatre, au sein de blocs de mémoire tampon.

Dans le contexte de l'invention également, on entend par « dispositif à modèle de traitement en flot de données », par opposition à un dispositif à mémoire partagée, un modèle d'architecture composé de plusieurs ressources matérielles reliées entre elles par des flux de données. Selon ce modèle, l'information circule de façon asynchrone dans le réseau constitué des ressources matérielles reliées entre elles et est transformée par les différents composants qu'elle traverse, notamment par les noeuds de calcul.

Ainsi, dans ce contexte, un traitement peut effectivement être modélisé et défini de façon univoque par un graphe orienté dont les sommets sont des noeuds de calculs et des noeuds de mémoire tampon et dont les arcs sont des liens orientés de transferts de données entre ces noeuds. Puisqu'un traitement reçoit des données d'entrées et fournit des données de sorties, le graphe qui le représente comporte nécessairement un ou plusieurs noeuds d'entrée et un ou plusieurs noeuds de sortie de type mémoire tampon.

En outre, un traitement peut être avantageusement structurellement morcelé à l'aide de noeuds de mémoire tampon disposés, avec les noeuds de calculs sollicités par ce traitement, entre les noeuds d'entrée et de sortie. Un traitement peut aussi être séquentiellement subdivisé en une succession de « sessions » qui constituent chacune un ensemble suffisant d'opérations et de transferts de données entre noeuds de mémoire tampon. A l'issue d'une session, les différents noeuds de mémoire tampon du graphe représentatif du traitement ont émis et/ou reçu une certaine quantité de données et chacun des noeuds de calcul par lesquels ces données ont transité est dans un état ne nécessitant pas de transfert de données supplémentaire : les sessions d'un traitement sont définies en assurant que chaque transfert de données entre noeuds de calcul est un multiple de la granularité minimale de traitement pour ce noeud de calcul.

Au niveau d'un noeud de calcul du graphe représentant un traitement, ce dernier est vu comme une « tâche » à exécuter prédéfinie dans ce noeud de calcul : la tâche est une succession de toutes les opérations élémentaires que doit exécuter le noeud de calcul considéré pour la réalisation du traitement au niveau du graphe complet. La subdivision séquentielle du traitement en sessions se répercute alors sur ce noeud de calcul au niveau de la tâche à exécuter, elle-même divisée en une succession de sessions.

Une difficulté majeure pour le type de dispositif précité est de synchroniser les différents traitements de sorte qu'ils puissent s'exécuter simultanément de la façon la plus autonome possible tout en mutualisant certaines des ressources du dispositif. Cette synchronisation se répercute sur chaque ressource dont les données de sortie doivent toujours pouvoir être prises en compte par les ressources réceptrices. Elle ne peut pas être assurée point à point sur chaque lien des graphes de traitement parce que les flux de données à travers ces liens ne sont pas linéaires du fait que certaines ressources du dispositif ont plusieurs entrées et/ou sorties. Il est donc généralement choisi d'assurer un contrôle centralisé des tâches exécutées par les ressources, en général programmé sur un composant dédié du dispositif de traitement.

Mais cette synchronisation centralisée pose problème parce qu'elle conduit à une utilisation non optimale de l'architecture globale du dispositif et de ses ressources. Notamment, certains noeuds de calcul peuvent rester inactifs au cours d'un traitement alors qu'ils auraient pu démarrer indépendamment une nouvelle session correspondant à un autre traitement.

Il peut ainsi être souhaité de prévoir un dispositif à exécution distribuée d'une pluralité de traitements qui permette de s'affranchir de ce problème ou au moins de l'atténuer.

L'invention a donc pour objet un dispositif de traitement de données numériques, notamment de type système sur puce électronique, à exécution distribuée d'une pluralité de traitements de données sur une pluralité de noeuds de calcul et à modèle de traitement en flot de données dans lequel chaque traitement de données destiné à être exécuté sur le dispositif est modélisé par un graphe orienté comportant des noeuds de calcul, des noeuds de mémoire tampon et des liens orientés de transfert de données entre ces noeuds depuis au moins un noeud de mémoire tampon d'entrée vers au moins un noeud de mémoire tampon de sortie, deux traitements différents pouvant comporter au moins un noeud de calcul commun, ce dispositif de traitement comportant des moyens pour, à partir d'un multi-graphe orienté valué constitué de l'union de plusieurs graphes de traitements distincts et divisé en plusieurs sous-multi-graphes orientés valués, dits tronçons, dont les noeuds d'entrée et de sortie sont des noeuds de mémoire tampon du multi-graphe, identifier un module de coordination pour chaque tronçon, chaque module de coordination identifié étant conçu pour synchroniser des portions de traitements destinées à être exécutées dans le tronçon auquel il est associé indépendamment de portions de traitements destinées à être exécutées dans les autres tronçons.

Puisque chaque traitement exécutable sur le dispositif est représenté par un graphe orienté, l'ensemble de ces traitements à ressources mutualisées peut être représenté par l'union de ces graphes orientés, à savoir un multi-graphe orienté valué. Il s'agit d'un multi-graphe valué parce qu'entre deux noeuds il peut y avoir plusieurs liens valués correspondant à des traitements différents, chaque lien étant valué par un identifiant du traitement correspondant.

Ainsi, en considérant la synchronisation non pas de façon centralisée mais indépendamment au niveau de chaque tronçon issu d'une division du multi-graphe en sous-parties, la sollicitation des ressources est améliorée parce que l'on restreint le problème de synchronisation des traitements multiples à des sous parties du système complet délimitées par des noeuds de mémoire tampon utilisés. Les traitements sont synchronisés sur la totalité d'un même un tronçon, pour lequel un ordonnancement des sessions peut être défini, notamment selon des protocoles de communication connus. On peut alors considérer que la coordination des différents traitements est globalement distribuée et localement centralisée.

De façon optionnelle, chaque module de coordination est l'un des noeuds de calcul du tronçon auquel il est associé.

De façon optionnelle également, les moyens d'identification du module de coordination de l'un quelconque des tronçons comportent des liens orientés dits « virtuels » de transmission de messages d'information sans transmission des données à traiter, établis en plus desdits liens de transfert de données, entre le module de coordination et d'autres noeuds du tronçon.

De façon optionnelle également, chaque noeud de calcul de l'un quelconque des tronçons est configuré pour :
- ne pouvoir démarrer une portion de traitement que lorsqu'il a reçu au moins un message d'information de démarrage de cette portion de traitement en provenance d'au moins un autre noeud prédéterminé de son tronçon via au moins l'un des liens orientés du graphe de ce traitement, et
- émettre au moins un message d'information de démarrage de cette portion de traitement vers au moins un autre noeud prédéterminé de son tronçon via au moins l'un des liens orientés du graphe de ce traitement, dès qu'il a démarré cette portion de traitement.

L'invention a également pour objet un procédé d'exécution distribuée d'une pluralité de traitements de données sur une pluralité de noeuds de calcul d'un dispositif de traitement de données numériques, notamment un système sur puce électronique, à modèle de traitement en flot de données dans lequel chaque traitement de données destiné à être exécuté sur le dispositif est modélisé par un graphe orienté comportant des noeuds de calcul, des noeuds de mémoire tampon et des liens orientés de transfert de données entre ces noeuds depuis au moins un noeud de mémoire tampon d'entrée vers au moins un noeud de mémoire tampon de sortie, deux traitements différents pouvant comporter au moins un noeud de calcul commun, ce procédé comportant les étapes suivantes :
- à partir d'un multi-graphe orienté valué constitué de l'union de plusieurs graphes de traitements distincts, division de ce multi-graphe en plusieurs sous-multi-graphes orientés valués dits tronçons, les noeuds d'entrée et de sortie de chaque tronçon étant des noeuds de mémoire tampon,
- identification d'un module de coordination pour chaque tronçon,
- synchronisation de portions de traitements destinées à être exécutées dans chaque tronçon par le module de coordination correspondant, indépendamment de la synchronisation de portions de traitements destinées à être exécutées dans les autres tronçons.

De façon optionnelle, ce procédé peut comporter une étape de sélection automatique du module de coordination pour chaque tronçon.

De façon optionnelle également, l'étape de sélection automatique du module de coordination pour un tronçon comporte les sous-étapes suivantes :
- subdivision du tronçon en trois sous-ensembles disjoints, le premier sous-ensemble, dit « ensemble univalent source », comportant tous les noeuds d'entrée du tronçon et tous ses autres noeuds univalents pouvant être atteints depuis les noeuds d'entrée mais pas depuis un noeud multivalent, le deuxième sous-ensemble, dit « ensemble univalent puits », comportant tous les noeuds de sortie du tronçon et tous ses autres noeuds univalents pouvant atteindre les noeuds de sortie mais pas un noeud multivalent, et le troisième sous-ensemble, dit « ensemble multivalent », comportant tous les noeuds du tronçon qui n'appartiennent ni au premier ni au deuxième sous-ensemble,
- sélection du module de coordination parmi l'un des noeuds de calcul de l'ensemble multivalent destinataires d'un lien orienté de transfert de données provenant de l'ensemble univalent source, selon un critère prédéterminé.

De façon optionnelle également, le critère de sélection prédéterminé est choisi parmi l'un des éléments de l'ensemble constitué :
- du noeud de calcul destinataire d'un lien orienté provenant de l'ensemble univalent source qui présente le plus de liens sortants vers d'autres noeuds destinataires d'un lien orienté provenant de l'ensemble univalent source, et
- du noeud de calcul destinataire d'un lien orienté provenant de l'ensemble univalent source qui reçoit le plus de liens entrants depuis des noeuds de l'ensemble univalent source.

De façon optionnelle également, l'étape d'identification du module de coordination de chaque tronçon comporte l'établissement de liens orientés dits « virtuels » de transmission de messages d'information sans transmission des données à traiter, en plus desdits liens de transfert de données, entre le module de coordination et d'autres noeuds de ce tronçon.

Enfin, de façon optionnelle également, l'étape d'identification du module de coordination de chaque tronçon comporte les sous-étapes suivantes pour chaque lien orienté de transfert de données, dit de transition, provenant de l'ensemble univalent source et pointant vers l'ensemble multivalent :
- un nouveau lien virtuel est créé entre le noeud d'origine de ce lien de transition et le module de coordination, si un lien ou un ensemble de liens n'existe pas déjà pour le même traitement entre le noeud d'origine de ce lien de transition et le module de coordination, et
- un nouveau lien virtuel est créé entre le module de coordination et le noeud vers lequel pointe le lien de transition, si un lien ou un ensemble de liens n'existe pas déjà pour le même traitement entre le module de coordination et le noeud vers lequel pointe le lien de transition.

L'invention sera mieux comprise à l'aide de la description qui va suivre, donnée uniquement à titre d'exemple et faite en se référant aux dessins annexés dans lesquels :
- la figure 1 représente schématiquement la structure fonctionnelle générale d'un dispositif de traitement de données selon un mode de réalisation de l'invention,
- la figure 2 illustre les étapes successives d'un procédé d'exécution distribuée d'une pluralité de traitements de données selon un mode de réalisation de l'invention,
- les figures 3 et 4 illustrent en détail le fonctionnement de certaines étapes du procédé de la figure 2 à l'aide d'un exemple particulier de pluralité de traitements,
- la figure 5 représente schématiquement la structure fonctionnelle générale d'un noeud de calcul du dispositif de la figure 1, selon un mode de réalisation de l'invention.

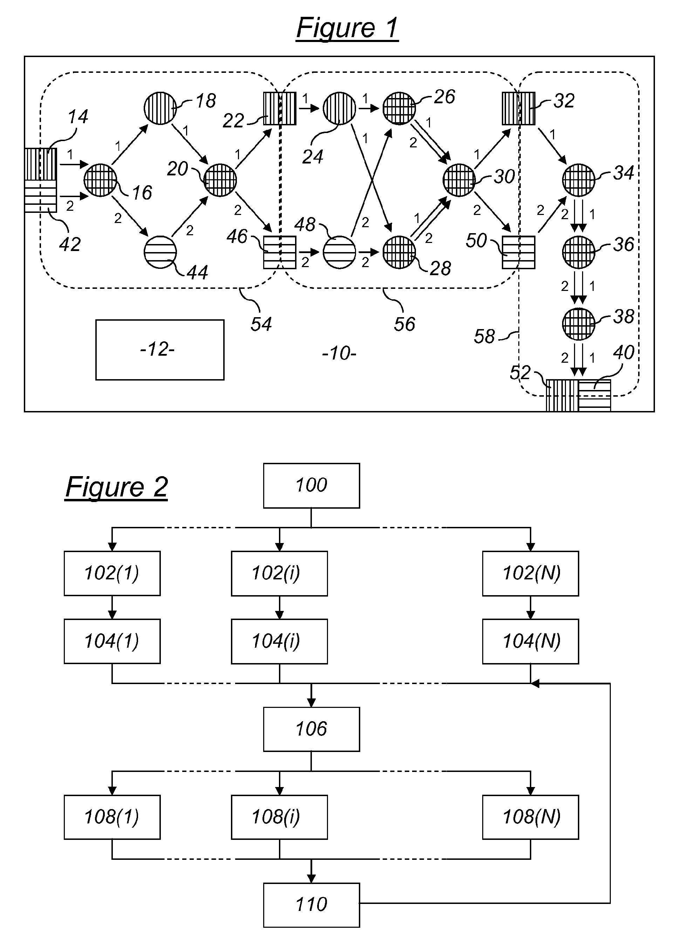

Le dispositif de traitement de données numériques 10 représenté sur la figure 1 est par exemple un dispositif de type système sur puce électronique à modèle de traitement en flot de données, comportant une pluralité de microprocesseurs intégrés et interconnectés pour l'exécution de plusieurs traitements en parallèle. Il comporte notamment un processeur hôte 12 et une pluralité de ressources 14 à 52 intervenant dans l'exécution distribuée de traitements programmés sur ce dispositif 10.

Ces ressources sont représentées de façon fonctionnelle sur la figure 1. Elles comportent des noeuds de mémoire tampon et des noeuds de calcul susceptibles d'être sollicités par les traitements exécutables sur le dispositif. Dans l'exemple simple mais non limitatif illustré sur cette figure, deux traitements sont envisagés sur le dispositif 10 et sont représentés par un multi-graphe orienté valué dont les liens de transfert de données sont identifiés soit par l'indice « 1 » pour le premier des deux traitements soit par l'indice « 2 » pour le second des deux traitements. Les noeuds sollicités par le premier traitement comportent des rayures verticales sur la figure 1. Ceux sollicités par le second traitement comportent des rayures horizontales. Par conséquent, les noeuds multivalents, sollicités par les deux traitements, comportent des rayures verticales et horizontales.

Le multi-graphe orienté valué résulte d'un premier graphe orienté représentant le premier traitement et d'un second graphe orienté représentant le second traitement.

Le premier graphe comporte un noeud de mémoire tampon d'entrée 14, puis, dans l'ordre du premier traitement indiqué par les liens de transfert de données référencés par l'indice « 1 », un noeud de calcul 16, un noeud de calcul 18, un noeud de calcul 20, un noeud de mémoire tampon 22, un noeud de calcul 24, deux noeuds de calcul 26 et 28, un noeud de calcul 30, un noeud de mémoire tampon 32, un noeud de calcul 34, un noeud de calcul 36, un noeud de calcul 38 et un noeud de mémoire tampon de sortie 40. Le premier traitement est donc structurellement morcelé à l'aide des noeuds de mémoire tampon 22 et 32.

Le second graphe comporte un noeud de mémoire tampon d'entrée 42, puis, dans l'ordre du second traitement indiqué par les liens de transfert de données référencés par l'indice « 2 », le noeud de calcul 16, un noeud de calcul 44, le noeud de calcul 20, un noeud de mémoire tampon 46, un noeud de calcul 48, les deux noeuds de calcul 26 et 28, le noeud de calcul 30, un noeud de mémoire tampon 50, le noeud de calcul 34, le noeud de calcul 36, le noeud de calcul 38 et un noeud de mémoire tampon de sortie 52. Le second traitement est donc structurellement morcelé à l'aide des noeuds de mémoire tampon 46 et 50.

Les noeuds de calcul 16, 20, 26, 28, 30, 34, 36 et 38 sont communs aux deux traitements et sont donc multivalents.

Grâce au morcellement structurel des deux traitements, le multi-graphe orienté valué est lui-même divisé structurellement en plusieurs sous-multi-graphes orientés valués, dits tronçons, dont les noeuds d'entrée et de sortie sont des noeuds de mémoire tampon du multi-graphe. Un premier tronçon 54 comporte les noeuds 14, 16, 18, 20, 22, 42, 44 et 46 parmi lesquels les noeuds de mémoire tampon 14 et 42 forment les noeuds d'entrée et les noeuds de mémoire tampon 22 et 46, les noeuds de sortie. Un deuxième tronçon 56 comporte les noeuds 22, 24, 26, 28, 30, 32, 46, 48 et 50 parmi lesquels les noeuds de mémoire tampon 22 et 46 forment les noeuds d'entrée et les noeuds de mémoire tampon 32 et 50, les noeuds de sortie. Un troisième tronçon 58 comporte les noeuds 32, 34, 36, 38, 40, 50 et 52 parmi lesquels les noeuds de mémoire tampon 32 et 50 forment les noeuds d'entrée et les noeuds de mémoire tampon 40 et 52, les noeuds de sortie.

La division du multi-graphe en tronçons peut être définie a priori et implémentée lors de l'intégration des noeuds de mémoire tampon, des noeuds de calcul et de leurs fonctions respectives dans le dispositif 10. Elle peut également être réalisée automatiquement, notamment par le processeur hôte 12, sur la base de l'organisation structurelle des noeuds de mémoire tampon du multi-graphe. En effet, si l'on définit le « cône de dépendance » d'un noeud de mémoire tampon comme l'ensemble des noeuds de calcul situés sur un chemin de même traitement depuis ce noeud de mémoire tampon vers un autre noeud de mémoire tampon dit noeud extrême de ce cône de dépendance, et si l'on définit une « relation d'interférence » entre deux noeuds de mémoire tampon comme une relation établie entre deux noeuds à partir du moment où ces noeuds sont les extrêmes de cônes de dépendances ayant des noeuds de calcul communs, alors on peut définir les tronçons du multi-graphe comme les classes d'équivalence de cette relation d'interférence. Il est ainsi envisageable de déterminer automatiquement les tronçons par une programmation appropriée du processeur hôte 12.

On notera que, de préférence, il n'y a pas de rebouclage (i.e. un circuit fermé de liens orientés) des graphes de traitements, et donc du multi-graphe, sur un même noeud de mémoire tampon, de sorte qu'il ne peut y avoir d'étreinte fatale (de l'Anglais « deadlock » pour désigner un interblocage qui se produit lorsque deux tâches exécutées en même temps sur deux noeuds de calcul différents attendent chacune des données venant de l'autre).

Conformément à l'invention, pour chaque tronçon 54, 56 et 58, un module de coordination est identifié. Il est plus précisément conçu pour synchroniser des portions de traitements destinées à être exécutées dans le tronçon auquel il est associé indépendamment de portions de traitements destinées à être exécutées dans les autres tronçons. Lorsque les traitements sont séquentiellement divisés en sessions successives, le module de coordination est conçu pour synchroniser les sessions de traitements différents au sein du tronçon auquel il est associé. Ce module de coordination peut être extérieur ou appartenir au tronçon auquel il est associé.

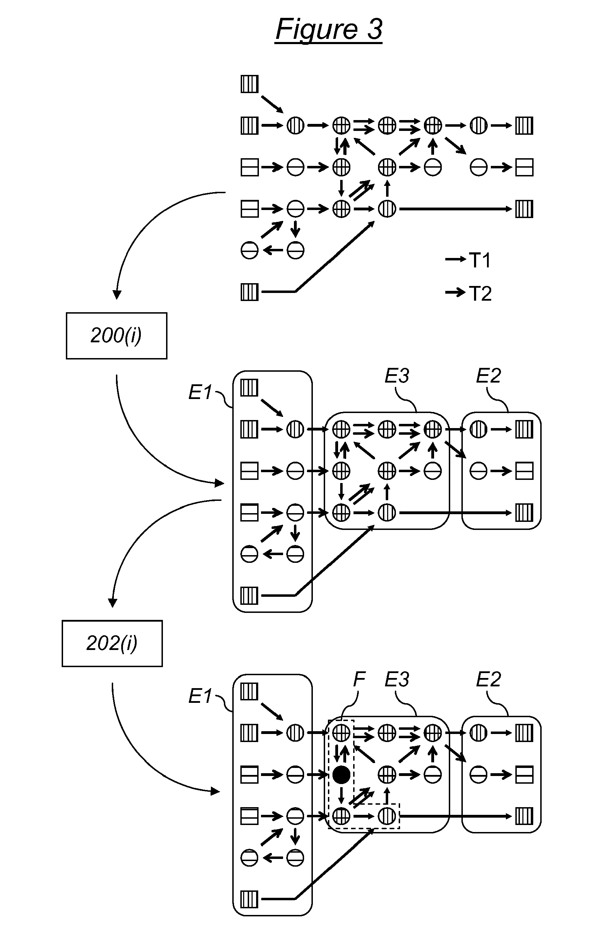

Dans un mode de réalisation préféré mais non limitatif qui sera détaillé en référence aux figures 3 à 5, chaque tronçon comporte un module de coordination sélectionné parmi ses noeuds de calcul. Dans l'exemple de la figure 1, les noeuds de calcul 16, 26 et 34 peuvent ainsi être sélectionnés pour être les modules de coordination respectifs des tronçons 54, 56 et 58. Dans le mode de réalisation qui sera détaillé en référence aux figures 3 à 5, un procédé de sélection automatique du module de coordination pour chaque tronçon sera également décrit. Un tel procédé de sélection automatique peut par exemple être mis en oeuvre par le processeur hôte 12 qui possède alors des instructions de codes de programme pour l'exécution de ses étapes successives.

Le dispositif 10 comporte enfin des moyens pour identifier le module de coordination de chaque tronçon. Ces moyens peuvent être le processeur hôte 12 lui-même qui est alors le gestionnaire d'identifiants uniques des modules de coordination. Dans ce cas, c'est lui aussi qui peut comporter des instructions de code pour la mise en oeuvre par chaque module de coordination sélectionné et identifié d'un procédé de synchronisation des traitements au sein de chaque tronçon, par exemple selon un protocole de communication connu. En variante, les moyens d'identification des modules de coordination peuvent être explicitement (par un marqueur particulier), ou implicitement (par structure), intégrés dans les tronçons eux-mêmes. Une telle variante sera illustrée par le mode de réalisation qui sera détaillé en référence aux figures 3 à 5.

Le procédé dont les étapes successives sont illustrées sur la figure 2 comporte une première phase de structuration et d'initialisation d'un multi-graphe de traitements implémenté dans le dispositif 10 et une seconde phase d'exécution distribuée des traitements de ce multi-graphe dans le dispositif 10.

La première phase de structuration et d'initialisation comporte une première étape 100 de division du multi-graphe en une pluralité de tronçons tels que les tronçons 54, 56 et 58 de l'exemple illustré sur la figure 1. Comme indiqué précédemment, cette première étape de division peut être exécutée automatiquement par le processeur hôte 12 du dispositif 10. Elle aboutit à l'identification de N tronçons.

Ensuite, au cours de N étapes de sélection 102(1), ... 102(i), ... 102(N) appliquées respectivement aux N tronçons identifiés précédemment, un module de coordination est sélectionné pour chaque tronçon. Comme indiqué précédemment également, un procédé de sélection automatique du module de coordination pour chaque tronçon peut être mis en oeuvre, notamment par le processeur hôte 12. Un mode de réalisation particulier de l'une quelconque des étapes de sélection 102(i) sera détaillé en référence à la figure 3.

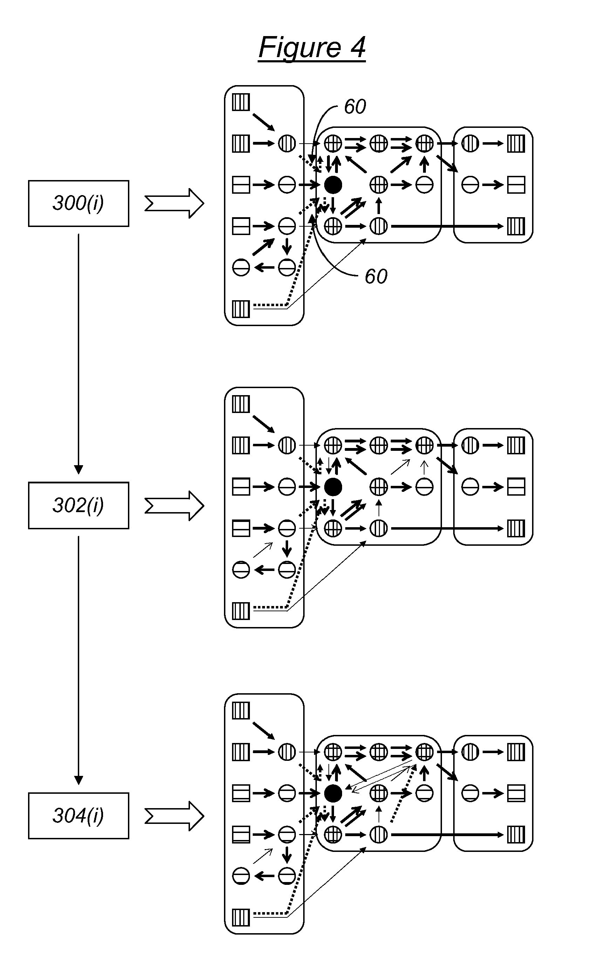

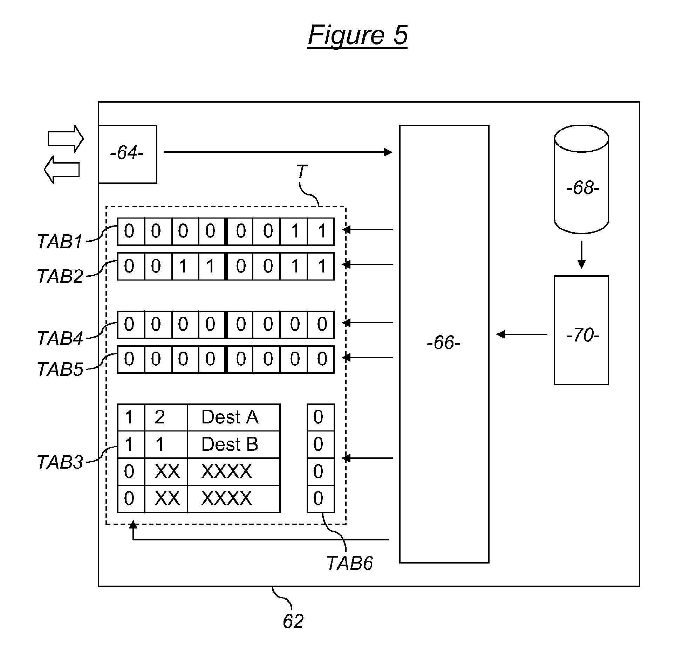

Enfin, la première phase de structuration et d'initialisation s'achève si nécessaire par l'exécution de N étapes d'initialisation 104(1), ... 104(i), ... 104(N) appliquées respectivement aux N tronçons identifiés précédemment. Au cours de chacune de ces étapes, le tronçon correspondant et son module de coordination sont initialisés pour pouvoir synchroniser les sessions de traitements destinées à être exécutée selon un protocole de communication prédéterminé. Bien sûr l'initialisation dépend du protocole utilisé. Un exemple d'initialisation sera illustré en référence à la figure 4, dans le cadre d'un protocole de communication qui sera détaillé à l'aide de la figure 5. Dans cet exemple, l'initialisation du tronçon permet d'identifier son module de coordination.

Lorsque la première phase de structuration et d'initialisation est terminée, le dispositif 10 est prêt pour la mise en oeuvre de la seconde phase d'exécution distribuée des traitements implémentés dans le dispositif 10.

Cette seconde phase comporte une étape 106 d'attente du démarrage d'au moins un traitement dans le dispositif 10. Le démarrage d'un traitement est sollicité dès la réception de données numériques par l'un de ses noeuds de mémoire tampon d'entrée. Par conséquent, on peut considérer que l'étape 106 détecte le démarrage d'au moins un traitement dès la réception de données numériques par au moins l'un des noeuds de mémoire tampon d'entrée du multi-graphe de traitements.

Suite à cette détection, pour une bonne exécution distribuée de la pluralité de traitements dans les N tronçons du dispositif 10, on passe à N étapes 108(1), ... 108(i), ... 108(N) de synchronisation exécutées indépendamment les unes des autres pour chaque tronçon selon un protocole de communication prédéterminé. Celui-ci peut être choisi parmi des protocoles de synchronisation connus, mais peut aussi, avantageusement, être conforme à celui qui sera détaillé en référence à la figure 5.

Chaque traitement pouvant être subdivisé séquentiellement en une pluralité de sessions devant s'exécuter dans les tronçons concernés du multi-graphe, on notera que la synchronisation dans un tronçon porte sur la coordination de l'exécution de sessions issues de traitements différents. En effet, le problème de synchronisation de deux sessions d'un même traitement ne se pose pas puisque leur séquence d'exécution est prédéterminée.

Lorsque toutes les sessions de tous les traitements exécutés sont terminées dans tous les tronçons, on passe alors à une étape 110 de fin des traitements, puis on revient, par exemple, en amont de l'étape 106, dans l'attente d'au moins un nouveau traitement à exécuter.

L'une quelconque des étapes 102(i) de sélection d'un module de coordination pour un tronçon i donné va maintenant être détaillée en référence à la figure 3, selon un mode de réalisation particulier de sélection qui peut être exécutée automatiquement. Sur cette figure, un tronçon unique d'un multi-graphe quelconque à deux traitements T1 et T2 est illustré. Il est fourni à titre d'exemple purement illustratif, non limitatif, et n'a notamment pas de lien particulier avec le multi-graphe de la figure 1.

Dans ce tronçon, les noeuds sollicités par le premier traitement T1 comportent des rayures verticales, ceux sollicités par le second traitement T2 comportent des rayures horizontales. Par conséquent, les noeuds multivalents, sollicités par les deux traitements, comportent des rayures verticales et horizontales. Pour des raisons de clarté de la figure 3, contrairement à la règle d'illustration choisie pour la figure 1, les valeurs des liens valués orientés de transmission de données du tronçon ne sont pas indiquées mais les liens eux-mêmes sont représentés par des flèches différentes selon qu'ils appartiennent au premier ou au second traitement. On note que dans cet exemple particulier, le tronçon considéré comporte cinq noeuds de mémoire tampon d'entrée dont trois sont associés au premier traitement T1 et deux au second traitement T2 ; il comporte en outre trois noeuds de mémoire tampon de sortie dont deux sont associés au premier traitement T1 et un au second traitement T2.

Lors d'une première étape 200(i) de préparation de la sélection, le tronçon i est subdivisé en trois sous-ensembles disjoints E1, E2 et E3. Le premier sous-ensemble E1, dit « ensemble univalent source » du tronçon, comporte tous les noeuds d'entrée du tronçon et tous ses autres noeuds univalents qui peuvent être atteints (via les liens précités) depuis les noeuds d'entrée mais pas par un noeud multivalent. Le deuxième sous-ensemble E2, dit « ensemble univalent puits » du tronçon, comporte tous les noeuds de sortie du tronçon et tous ses autres noeuds univalents qui peuvent atteindre les noeuds de sortie mais pas un noeud multivalent. Enfin, le troisième sous-ensemble E3, dit « ensemble multivalent » du tronçon, comporte tous les noeuds du tronçon qui n'appartiennent ni à E1, ni à E2. L'ensemble E3 comporte notamment tous les noeuds multivalents du tronçon.

Lors d'une seconde étape 202(i) de sélection en tant que telle, un module de coordination du tronçon considéré est sélectionné parmi les noeuds de calcul de l'ensemble multivalent E3. Plus précisément, si l'on définit la « frontière multivalente source » F de l'ensemble multivalent E3 comme étant l'ensemble des noeuds de E3 destinataires d'un lien orienté provenant de l'ensemble univalent source E1, un critère de sélection du module de coordination peut être le suivant : on sélectionne comme module de coordination le noeud de calcul de la frontière multivalente source F qui présente le plus de liens sortants vers d'autres noeuds de la frontière multivalente source F. Dans l'exemple illustré sur la figure 3, il s'agit du noeud de calcul représenté en noir à l'issue de l'étape 202(i). Comme critère complémentaire ou alternatif, on peut aussi sélectionner comme module de coordination le noeud de calcul de la frontière multivalente source F qui reçoit le plus de liens entrants depuis des noeuds de l'ensemble univalent source E1.

La sélection d'un module de coordination par tronçon pourrait aussi être prédéterminée par un opérateur. Mais, telle que décrite précédemment, l'une quelconque des étapes 102(i) peut être exécutée automatiquement par le dispositif 10 à partir de la connaissance du multi-graphe subdivisé en tronçons, grâce à la définition déterministe du choix du module de coordination. Plus précisément, les étapes 200(i) et 202(i) peuvent par exemple être exécutées par le processeur hôte 12 et les résultats de ces étapes (sous-ensembles E1, E2, E3, F, et identification du module de coordination) stockés en mémoire dans le dispositif 10. En particulier, l'étape 200(i) peut être exécutée d'un point de vue algorithmique en cherchant tout d'abord les noeuds de calcul multivalents d'un tronçon par exploration des successeurs des noeuds d'entrée de ce tronçon, notamment en identifiant les noeuds accessibles depuis au moins deux noeuds d'entrée associés à des traitements différents ; puis, pour chaque noeud univalent du tronçon, on explore les graphes de ses prédécesseurs et de ses successeurs pour déterminer s'ils contiennent un noeud multivalent.

L'une quelconque des étapes 104(i) d'initialisation d'un tronçon i donné et de son module de coordination va maintenant être détaillée en référence à la figure 4, selon un mode de réalisation particulier d'initialisation qui peut être exécutée automatiquement. Pour des raisons de clarté de la figure 4, comme pour la figure 3, les valeurs des liens valués orientés de transmission de données du tronçon ne sont pas indiquées mais les liens eux-mêmes sont représentés par des flèches différentes selon qu'ils appartiennent au premier ou au second traitement. Par ailleurs, le tronçon illustré sur la figure 4 est le même que celui de la figure 3.

On notera au préalable que les liens orientés du tronçon considéré à l'issue de l'étape 102(i) sont définis comme des liens réels et primaires.

On entend par « lien réel », un lien orienté qui matérialise la transmission de données utiles au traitement considéré entre deux noeuds. Par opposition, un lien sera dit « virtuel » lorsqu'il ne sert qu'à transmettre des données de signalisation (par exemple, une information d'ouverture de session). Un lien réel est représenté sur la figure 4 par une flèche en trait plein alors qu'un lien virtuel est représenté par une flèche en trait interrompu.

On entend par « lien primaire », un lien orienté dont l'établissement, par transmission d'un message de signalisation, est nécessaire pour activer et/ou propager une session d'un traitement particulier sur un noeud vers lequel il pointe. Par opposition, un lien sera dit « secondaire » lorsqu'il n'est pas nécessaire de l'établir, par transmission d'un message de signalisation, pour activer et/ou propager une session d'un traitement particulier, mais lorsqu'il ne sert, outre l'éventuelle transmission de données utiles, que pour remplir une fonction d'information de l'état dans lequel se trouve le noeud source de ce lien. Un lien primaire est représenté sur la figure 4 par une flèche en trait épais alors qu'un lien secondaire est représenté par une flèche en trait fin.

Lors d'une première étape 300(i), pour chaque lien réel orienté pointant vers un noeud de la frontière multivalente source F autre que le module de coordination sélectionné :
- ce lien est redéfini comme lien secondaire (trait plein et fin),
- un nouveau lien primaire virtuel (trait interrompu et épais) est créé entre le noeud d'origine du lien redéfini en lien secondaire et le module de coordination, si un lien primaire réel (trait plein et épais), ou un ensemble de liens primaires réels, n'existe pas déjà pour le même traitement entre le noeud d'origine du lien redéfini en lien secondaire et le module de coordination, et
- un nouveau lien primaire virtuel (trait interrompu et épais) est créé entre le module de coordination et le noeud vers lequel pointe le lien redéfini en lien secondaire, si un lien primaire réel (trait plein et épais), ou un ensemble de liens primaires réels, n'existe pas déjà pour le même traitement entre le module de coordination et le noeud vers lequel pointe le lien redéfini en lien secondaire.

Ces nouveaux liens primaires virtuels créés constituent alors des moyens 60 structurels et implicites d'identification du module de coordination, intégrés dans le tronçon considéré. Notamment, les nouveaux liens primaires virtuels créés pointant vers le module de coordination permettent à ce dernier d'avoir une visibilité de tous les liens entrants dans l'ensemble multivalent E3, ensemble dans lequel doit justement se jouer la synchronisation des traitements, et plus précisément des sessions, du tronçon considéré. Ils lui permettent donc de prendre les bonnes décisions de synchronisation. En outre, la redéfinition de chaque lien pointant vers un noeud de la frontière multivalente source F autre que le module de coordination en lien secondaire permet d'empêcher que les noeuds de calcul autres que le module de coordination sélectionné ne puissent avoir l'initiative du démarrage d'une session d'un traitement.

Lors d'une deuxième étape 302(i), pour chaque traitement, ici T1 et T2, du tronçon, on détermine quel est l'arbre couvrant minimal des noeuds associés à ce traitement dans l'ensemble multivalent E3 qui permet la transmission des messages de signalisation dans tous ces noeuds. Les liens de cet arbre couvrant minimal restent primaires tandis que les autres liens associés au traitement considéré dans l'ensemble multivalent E3 sont redéfinis comme liens secondaires (traits fins). De même, au cours de cette étape, s'il existe au moins un cycle de noeuds univalents dans le tronçon, le lien primaire qui referme ce cycle est redéfini comme lien secondaire.

On s'affranchit ainsi de tout cycle dans la propagation de messages de signalisation portant sur un traitement

Enfin, lors d'une troisième étape 304(i), les noeuds situés en terminaison (i.e. les feuilles) des arbres couvrants minimaux déterminés à l'étape précédente sont reliés entre eux par l'ajout de nouveaux liens primaires virtuels (traits interrompus et épais) si nécessaire. Plus précisément, l'une des feuilles des arbres couvrants minimaux est sélectionnée et il est vérifié que toutes les autres feuilles sont reliées, directement ou indirectement, à cette feuille via un ou plusieurs liens primaires (traits épais). Si ce n'est pas le cas, on ajoute autant de liens primaires virtuels et on transforme autant de liens secondaires réels en liens primaires réels que nécessaire : dans l'exemple illustré sur la figure 4, un seul lien primaire virtuel est ajouté et un lien secondaire réel est transformé en lien primaire réel.

Au cours de cette même étape, on ajoute des liens virtuels secondaires pour relier la feuille sélectionnée au module de coordination du tronçon considéré. Un lien virtuel secondaire par traitement est ajouté. Ces liens virtuels secondaires permettent au module de coordination d'être informé lorsqu'une session d'un traitement peut être terminée librement sur chaque noeud de calcul du tronçon considéré sans risquer d'être bloquée par un manque de données utiles au traitement.

L'initialisation d'un tronçon décrite précédemment pourrait aussi être prédéterminée par un opérateur. Mais, telle que décrite précédemment, l'une quelconque des étape 104(i) peut être exécutée automatiquement par le dispositif 10 à partir de la connaissance du multi-graphe subdivisé en tronçons, grâce à la définition déterministe des étapes 300(i), 302(i) et 304(i) à exécuter. Plus précisément, ces étapes peuvent par exemple être exécutées par le processeur hôte 12 et les résultats de ces étapes (nouveaux liens virtuels créés, liens réels modifiés) stockés en mémoire dans le dispositif 10.

L'une quelconque des étapes 108(i) de synchronisation dans un tronçon i donné va maintenant être détaillée en référence à la figure 5 qui représente schématiquement la structure fonctionnelle générale d'un noeud de calcul et en particulier du module de coordination. La synchronisation est réalisée par l'application d'un protocole de communication prédéterminé sur la structure fonctionnelle des noeuds du tronçon considéré.

Dans un mode de réalisation préféré de l'invention, le protocole de communication envisagé comporte l'envoi, par l'un quelconque des noeuds de calcul du tronçon considéré, d'un message d'information d'ouverture de session, dès qu'une session d'un traitement démarre sur ce noeud. Ce message d'information comporte par exemple un premier champ identifiant qu'il s'agit bien d'un message d'information d'ouverture de session, un deuxième champ identifiant un traitement, un troisième champ identifiant le noeud émetteur de ce message auprès du noeud récepteur et un quatrième champ identifiant le noeud destinataire du message ou, de façon équivalente, le chemin que ce message doit parcourir pour arriver à destination.

Dans ce mode de réalisation préféré, chaque noeud de calcul 62 du tronçon considéré comporte au moins une interface d'entrée/sortie 64 pour la transmission de données (données utiles et/ou messages d'information), un calculateur 66 pour l'exécution de sessions de traitements, une mémoire locale 68 de stockage de contextes et un chargeur 70 de contextes dans le calculateur. Un contexte est un microprogramme permettant au noeud de calcul de réaliser une tâche, c'est-à-dire de participer localement à l'exécution d'une session d'un traitement particulier. La mémoire locale 68 peut stocker plusieurs contextes lorsque le noeud de traitement 62 est multivalent.

Par ailleurs, chaque noeud de calcul 62 comporte des moyens de stockage (i.e. mémoire locale) de tables de paramètres prédéterminées. Certaines de ces tables sont statiques, dites de configuration : les données qu'elles contiennent permettent de définir quels sont les messages d'information que le noeud 62 doit recevoir ou émettre avant d'effectuer telle ou telle action pour un traitement donné. D'autres tables sont dynamiques, dites de travail : les données qu'elles contiennent et qui évoluent dynamiquement identifient quels sont les messages d'information que le noeud 62 a émis ou reçu à chaque instant pour un traitement donné. Dans le mode de réalisation envisagé, le noeud de calcul 62 comporte un jeu de six tables par traitement. En pratique il comporte autant de jeux de telles tables que de traitements qu'il peut exécuter, mais un seul jeu de tables est illustré sur la figure 5, uniquement par souci de simplification.

Pour un traitement T quelconque, une première table de configuration binaire TAB1, dont chaque bit correspond à un noeud source potentiel du tronçon auquel appartient le noeud de calcul 62, identifie par des bits à « 1 » les noeuds dont le noeud de calcul 62 doit recevoir un message d'information d'ouverture de session pour le traitement T avant de pouvoir lui-même ouvrir cette session. Dans l'exemple illustré sur la figure 5, en identifiant de N0 à N7 les noeuds sources potentiels du noeud de calcul 62, du premier bit de poids faible à l'extrémité droite de la table TAB1 au huitième bit de poids fort à l'extrémité gauche de la table TAB1, les noeuds dont le noeud de calcul 62 doit recevoir un message d'information d'ouverture de session pour le traitement T avant de pouvoir lui-même ouvrir cette session sont les noeuds N0 et N1. On notera que, du fait de la définition précitée de « lien primaire » les bits à « 1 » de la première table de configuration binaire TAB1 concernent nécessairement des noeuds à l'origine de liens primaires vers le noeud de calcul 62. De façon optionnelle les noeuds potentiellement émetteurs de messages et/ou données sont ordonnés de sorte que les n premiers bits de poids faible (ici n = 4) concernent des noeuds susceptibles d'émettre des données utiles (liens réels) et que les autres bits de poids fort concernent des noeuds non susceptibles d'émettre des données utiles (liens virtuels de signalisation).

Pour le même traitement T, une deuxième table de configuration binaire TAB2, dont les bits correspondent aux mêmes noeuds que dans la table TAB1, identifie par des bits à « 1 » les noeuds dont le noeud de calcul 62 doit recevoir un message d'information d'ouverture de session pour le traitement T avant de pouvoir considérer que la session en cours sera terminée quand il aura lui-même exécuté sa tâche pour cette session. Dans l'exemple illustré sur la figure 5, les bits à « 1 » de la table TAB2 correspondent aux noeuds N0, N1, N4 et N5. On notera que tous les bits à 1 de la première table de configuration binaire TAB1 sont aussi à « 1 » dans la deuxième table de configuration binaire TAB2. Mais la table TAB2 contient d'autres bits à « 1 » qui peuvent concerner des noeuds à l'origine de liens secondaires vers le noeud de calcul 62.

Pour le même traitement T, une troisième table de configuration binaire TAB3 identifie les noeuds auxquels le noeud de calcul 62 doit envoyer des messages d'information d'ouverture de session pour le traitement T lorsqu'il a effectivement ouvert cette session. Chaque ligne de cette table identifie un noeud potentiellement destinataire, en troisième colonne. La première colonne indique par un bit à « 1 », pour le traitement T, quels sont les noeuds qui doivent effectivement être destinataires de ces messages. La deuxième colonne donne l'identifiant du noeud 62 dans les tables TAB1 et TAB2 du noeud identifié dans la troisième colonne. La troisième colonne identifie, soit directement, le noeud destinataire du message soit, de façon équivalente, le chemin que le message doit parcourir pour arriver à destination.

En outre, pour le traitement T, une première table de travail binaire TAB4, dont les bits correspondent aux mêmes noeuds que dans les tables TAB1 et TAB2, identifie par des bits à « 1 » les noeuds dont le noeud de calcul 62 a reçu un message d'information d'ouverture de session pour la session en cours du traitement T. A l'initialisation, tous les bits de cette table sont à « 0 ». Une deuxième table de travail binaire TABS, dont les bits correspondent aux mêmes noeuds que dans la table TAB4, identifie par des bits à « 1 » les noeuds dont le noeud de calcul 62 a reçu un message d'information d'ouverture de session pour la session suivante du traitement T. A l'initialisation, tous les bits de cette table sont également à « 0 ». Cette table remplit une fonction de mémoire tampon.

Enfin, pour le traitement T, une troisième table de travail binaire TAB6, dont les bits correspondent aux bits de la première colonne de la troisième table de configuration TAB3, identifie par des bits à « 1 » les noeuds auxquels le noeud de calcul 62 a envoyé un message d'information d'ouverture de session pour la session en cours. A l'initialisation, tous les bits de cette table sont également à « 0 ».

Au début de l'étape de synchronisation 108(i), pour chaque traitement, tous les bits des tables de travail TAB4, TAB5 et TAB6 correspondantes du noeud de calcul 62 sont à « 0 ».

Pendant l'exécution d'au moins un traitement, le noeud de calcul 62 reçoit des messages d'information d'ouverture de session en provenance de noeuds auxquels il est relié en tant que destinataire par des liens réels ou virtuels, primaires ou secondaires tels qu'établis préalablement et/ ou au cours des étapes 300(i), 302(i) et 304(i).

Lorsqu'il reçoit un message d'information d'ouverture de session pour un traitement T, si ce message concerne la session en attente d'exécution de ce traitement, dite session en cours, le bit correspondant au noeud émetteur dans la table TAB4 passe à « 1 ». S'il concerne la session suivante, le bit correspondant au noeud émetteur dans la table TAB5 passe à « 1 ». Par défaut, on considère qu'un message d'information concerne la session en cours sauf si le bit correspondant dans la table TAB4 est déjà à « 1 », auquel cas on considère qu'il concerne la session suivante.

Tant que la première table de travail TAB4 ne contient pas la première table de configuration TAB1, autrement dit tant que tous les bits à « 1 » de TAB1 ne sont pas également à « 1 » dans TAB 4, la session en cours ne démarre pas sur le noeud 62. En revanche, dès que cette condition est remplie, le noeud 62 émet des messages d'information d'ouverture de session aux noeuds destinataires identifiés dans la troisième table de configuration TAB3 pour les informer qu'il démarre la session en cours. Chaque fois qu'un tel message d'information est émis par le noeud 62, le bit correspondant passe à « 1 » dans la troisième table de travail TAB6.

Lorsque la troisième table de travail TAB6 est égale à la première colonne de la troisième table de configuration TAB3, la session en cours démarre effectivement sur le noeud de calcul 62. Selon un protocole d'échange de données classique, qui ne sera donc pas détaillé, le noeud 62 reçoit des données de calcul de la part des noeuds auxquels il est relié en tant que destinataire par des liens réels. Notamment, ce protocole d'échange de données peut prévoir avantageusement que des données utiles au traitement ne sont transmises par un noeud émetteur que si le noeud destinataire a suffisamment de place pour les recevoir. Ceci peut être mis en oeuvre par l'envoi de paquets de données uniquement sur réception de paquets de crédits émis par le noeud destinataire.

Pendant l'exécution de la session du traitement T, des messages d'information peuvent encore être reçus concernant ce même traitement. Comme indiqué précédemment, s'il s'agit de messages concernant des noeuds dont le bit correspondant est déjà à « 1 » dans TAB4, c'est la table TAB5 concernant la session suivante qui est mise à jour. Sinon par défaut, c'est la table TAB4 qui est mise à jour. Bien sûr, pendant l'exécution de la session du traitement T, des messages d'information peuvent aussi être reçus concernant d'autres traitements : d'autres jeux de tables sont alors mis à jour.

Lorsque la première table de travail TAB4 contient la deuxième table de configuration TAB2, autrement dit lorsque tous les bits à « 1 » de TAB2 sont également à « 1 » dans TAB 4, la session en cours est considérée comme pouvant s'achever librement dans le tronçon considéré et le noeud 62 est considéré comme disponible pour l'exécution d'une nouvelle session, que ce soit la session suivante du même traitement ou une session d'un autre traitement, dès qu'il aura lui-même achevé l'exécution de sa tâche pour la session en cours.

Ainsi, lorsque la première table de travail TAB4 contient la deuxième table de configuration TAB2 et que l'exécution de la session en cours par le noeud de calcul 62 est achevée, celui-ci est prêt à sélectionner une nouvelle session pour la démarrer. Le contenu de la table TAB4 est alors remplacé par celui de la table TAB5 et les contenus des tables de travail TAB5 et TAB6 sont réinitialisés à « 0 ». Le noeud 62 peut alors sélectionner le premier des traitements, parmi les traitements en cours, pour lequel la première table de traitement TAB4 contient la table de configuration TAB2.

Dans le mode de réalisation précité de l'invention, dans lequel chaque tronçon est initialisé conformément aux étapes 300(i), 302(i) et 304(i) et dans lequel tous les noeuds de calculs fonctionnent de la façon détaillée en référence à la figure 5, un avantage est que le noeud de calcul sélectionné comme module de coordination ne fonctionne pas différemment des autres. Il ne remplit sa fonction de synchronisation générale du tronçon considéré que parce que des liens virtuels particuliers ont été créés dans le multi-graphe du tronçon :
- des liens virtuels primaires pour rediriger tous les liens entrant dans l'ensemble multivalent du tronçon vers le module de coordination,
- des liens virtuels secondaires vers le module de coordination, émanant pour chaque traitement d'une feuille sélectionnée de l'arbre minimal couvrant de l'ensemble multivalent du tronçon.

Un autre avantage réside dans la garantie, grâce à l'ajout de ces liens virtuels depuis et vers le module de coordination, qu'il est vérifié que toutes les données utiles pour un traitement sont bien présentes dans tous les noeuds de mémoire tampon d'entrée du tronçon avant de sélectionner une session de ce traitement. En variante, on peut aussi n'exiger la présence que d'une portion prédéterminée de données utiles dans les noeuds de mémoire tampon d'entrée (par exemple un minimum de 32 bits) : tout dépend de la règle que l'on choisit pour l'émission d'un message d'information d'ouverture de session depuis un noeud de mémoire tampon. De même, il peut être vérifié que tous les noeuds de mémoire tampon de sortie sont capable de recevoir les données traitées par un traitement, ou au moins une portion prédéterminée, avant de sélectionner une session de ce traitement.

On remarque aussi que, dans cet exemple d'implémentation, les messages d'information utiles à la synchronisation des sessions à exécuter suivent la transmission des données en se propageant de proche en proche dans le tronçon considéré.

Il apparaît clairement qu'un dispositif de traitement de données numérique tel que celui décrit précédemment permet d'améliorer la sollicitation des ressources par rapport à un dispositif classique à synchronisation centralisée.

Par ailleurs, l'implémentation particulière décrite précédemment permet d'identifier simplement et implicitement le module de coordination de chaque tronçon du multi-graphe des traitements.

En outre, la fonction de synchronisation du module de coordination n'exige aucune ressource supplémentaire spécifique puisque le module de coordination est choisi parmi l'un des noeuds de calcul du tronçon auquel il est associé et qu'il ne remplit sa fonction particulière que parce que des liens virtuels de transmission de messages d'information d'ouverture de session sont créés depuis et/ou vers ce module de coordination. Pour les mêmes raisons, n'importe quel noeud du tronçon pourrait a priori remplir cette fonction de coordination.

On notera aussi que l'invention n'est pas limitée au mode de réalisation décrit ci-dessus.

Comme cela a déjà été précisé, en variante le module de coordination d'un tronçon pourrait être extérieur à ce tronçon ou ne remplir qu'une fonction de coordination. En outre, le protocole de communication décrit précédemment est avantageux mais n'est pas le seul envisageable. Notamment, en variante il pourrait ne pas y avoir de distinction faite entre liens primaires et secondaire, mais une distinction en messages d'information primaires et secondaires. Dans ce cas, l'organisation fonctionnelle de chaque noeud de calcul s'en trouverait modifiée.

D'une façon générale, il apparaîtra à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Dispositif (10) de traitement de données numériques, notamment de type système sur puce électronique, à exécution distribuée d'une pluralité de traitements de données (T1, T2) sur une pluralité de noeuds de calcul (16, 18, 20, 24, 26, 28, 30, 34, 36, 38, 44, 48) et à modèle de traitement en flot de données dans lequel chaque traitement de données destiné à être exécuté sur le dispositif est modélisé par un graphe orienté comportant des noeuds de calcul, des noeuds de mémoire tampon et des liens orientés de transfert de données entre ces noeuds depuis au moins un noeud de mémoire tampon d'entrée (14, 42) vers au moins un noeud de mémoire tampon de sortie (40, 52), deux traitements différents pouvant comporter au moins un noeud de calcul commun (16, 20, 26, 28, 30, 34, 36, 38), **caractérisé en ce qu'**il comporte des moyens (12 ; 60) pour, à partir d'un multi-graphe orienté valué constitué de l'union de plusieurs graphes de traitements distincts et divisé en plusieurs sous-multi-graphes orientés valués (54, 56, 58), dits tronçons, dont les noeuds d'entrée et de sortie sont des noeuds de mémoire tampon du multi-graphe, identifier un module de coordination (16, 26, 34) pour chaque tronçon, et **en ce que** chaque module de coordination identifié est conçu pour synchroniser des portions de traitements destinées à être exécutées dans le tronçon auquel il est associé indépendamment de portions de traitements destinées à être exécutées dans les autres tronçons.

2. Dispositif de traitement de données numériques selon la revendication 1, dans lequel chaque module de coordination (16, 26, 34) est l'un des noeuds de calcul du tronçon auquel il est associé.

3. Dispositif de traitement de données numériques selon la revendication 2, dans lequel les moyens d'identification du module de coordination de l'un quelconque des tronçons comportent des liens orientés (60) dits « virtuels » de transmission de messages d'information sans transmission des données à traiter, établis en plus desdits liens de transfert de données, entre le module de coordination et d'autres noeuds du tronçon.

4. Dispositif de traitement de données numériques selon la revendication 3, dans lequel chaque noeud de calcul (16, 18, 20, 24, 26, 28, 30, 34, 36, 38, 44, 48) de l'un quelconque des tronçons est configuré pour :
- ne pouvoir démarrer une portion de traitement que lorsqu'il a reçu au moins un message d'information de démarrage de cette portion de traitement en provenance d'au moins un autre noeud prédéterminé de son tronçon via au moins l'un des liens orientés du graphe de ce traitement, et
- émettre au moins un message d'information de démarrage de cette portion de traitement vers au moins un autre noeud prédéterminé de son tronçon via au moins l'un des liens orientés du graphe de ce traitement, dès qu'il a démarré cette portion de traitement.

5. Procédé d'exécution distribuée d'une pluralité de traitements de données (T1, T2) sur une pluralité de noeuds de calcul (16, 18, 20, 24, 26, 28, 30, 34, 36, 38, 44, 48) d'un dispositif (10) de traitement de données numériques, notamment un système sur puce électronique, à modèle de traitement en flot de données dans lequel chaque traitement de données destiné à être exécuté sur le dispositif est modélisé par un graphe orienté comportant des noeuds de calcul, des noeuds de mémoire tampon et des liens orientés de transfert de données entre ces noeuds depuis au moins un noeud de mémoire tampon d'entrée (14, 42) vers au moins un noeud de mémoire tampon de sortie (40, 52), deux traitements différents pouvant comporter au moins un noeud de calcul commun (16, 20, 26, 28, 30, 34, 36, 38), **caractérisé en ce qu'**il comporte les étapes suivantes :
- à partir d'un multi-graphe orienté valué constitué de l'union de plusieurs graphes de traitements distincts, division (100) de ce multi-graphe en plusieurs sous-multi-graphes orientés valués dits tronçons, les noeuds d'entrée et de sortie de chaque tronçon étant des noeuds de mémoire tampon,
- identification (104(1), ..., 104(i), ...104(N)) d'un module de coordination pour chaque tronçon,
- synchronisation (108(1), ..., 108(i), ...108(N)) de portions de traitements destinées à être exécutées dans chaque tronçon par le module de coordination correspondant, indépendamment de la synchronisation de portions de traitements destinées à être exécutées dans les autres tronçons.

6. Procédé d'exécution distribuée d'une pluralité de traitements de données selon la revendication 5, comportant une étape (102(1), ..., 102(i), ...102(N)) de sélection automatique du module de coordination pour chaque tronçon.

7. Procédé d'exécution distribuée d'une pluralité de traitements de données selon la revendication 6, dans lequel l'étape (102(1), ..., 102(i), ...102(N)) de sélection automatique du module de coordination pour un tronçon comporte les sous-étapes suivantes :
- subdivision (200(1), ..., 200(i), ...200(N)) du tronçon en trois sous-ensembles disjoints, le premier sous-ensemble (E1), dit « ensemble univalent source », comportant tous les noeuds d'entrée du tronçon et tous ses autres noeuds univalents pouvant être atteints depuis les noeuds d'entrée mais pas depuis un noeud multivalent, le deuxième sous-ensemble (E2), dit « ensemble univalent puits », comportant tous les noeuds de sortie du tronçon et tous ses autres noeuds univalents pouvant atteindre les noeuds de sortie mais pas un noeud multivalent, et le troisième sous-ensemble (E3), dit « ensemble multivalent », comportant tous les noeuds du tronçon qui n'appartiennent ni au premier ni au deuxième sous-ensemble,
- sélection (202(1), ..., 202(i), ...202(N)) du module de coordination parmi l'un des noeuds de calcul de l'ensemble multivalent destinataires d'un lien orienté de transfert de données provenant de l'ensemble univalent source, selon un critère prédéterminé.

8. Procédé d'exécution distribuée d'une pluralité de traitements de données selon la revendication 7, dans lequel le critère de sélection prédéterminé est choisi parmi l'un des éléments de l'ensemble constitué :
- du noeud de calcul destinataire d'un lien orienté provenant de l'ensemble univalent source (E1) qui présente le plus de liens sortants vers d'autres noeuds destinataires d'un lien orienté provenant de l'ensemble univalent source, et
- du noeud de calcul destinataire d'un lien orienté provenant de l'ensemble univalent source (E1) qui reçoit le plus de liens entrants depuis des noeuds de l'ensemble univalent source.

9. Procédé d'exécution distribuée d'une pluralité de traitements de données selon l'une quelconque des revendications 5 à 8, dans lequel l'étape (104(1), ..., 104(i), ...104(N)) d'identification du module de coordination de chaque tronçon comporte l'établissement de liens orientés dits « virtuels » de transmission de messages d'information sans transmission des données à traiter, en plus desdits liens de transfert de données, entre le module de coordination et d'autres noeuds de ce tronçon.

10. Procédé d'exécution distribuée d'une pluralité de traitements de données selon les revendications 8 et 9, dans lequel l'étape (104(1), ..., 104(i), ...104(N)) d'identification du module de coordination de chaque tronçon comporte les sous-étapes (300(1), ..., 300(i), ...300(N)) suivantes pour chaque lien orienté de transfert de données, dit de transition, provenant de l'ensemble univalent source et pointant vers l'ensemble multivalent :
- un nouveau lien virtuel (60) est créé entre le noeud d'origine de ce lien de transition et le module de coordination, si un lien ou un ensemble de liens n'existe pas déjà pour le même traitement entre le noeud d'origine de ce lien de transition et le module de coordination, et
- un nouveau lien virtuel (60) est créé entre le module de coordination et le noeud vers lequel pointe le lien de transition, si un lien ou un ensemble de liens n'existe pas déjà pour le même traitement entre le module de coordination et le noeud vers lequel pointe le lien de transition.
